# EUROPÄISCHE PATENTSCHRIFT

(11) **EP 0 864 464 B1**
(45) Veröffentlichungstag und Bekanntmachung des Hinweises auf die Patenterteilung: **08.05.2002**
(21) Anmeldenummer: 97120156.1
(22) Anmeldetag: 18.11.1997
(51) Int. Cl.: B60Q 7/00

(54) **Zusammenlegbares Warndreieck**
Foldable signalisation triangle
Triangle de signalisation pliable

(30) Priorität: 12.03.1997 DE 19710074
(43) Veröffentlichungstag der Anmeldung: 16.09.1998
(73) Patentinhaber: GEBRA GMBH & CO. GEBR. RADERSCHAD KG, 53773 Hennef (DE)
(72) Erfinder: Walgenbach, Reinhold, 53773 Hennef (DE)
(74) Vertreter: Brandenburg, Thomas, Dr.

(56) Entgegenhaltungen:
- WO-A-96/28319
- DE-U- 9 400 535

## Beschreibung

Die Erfindung betrifft ein zusammenlegbares Warndreieck zur Mitführung in Kraftfahrzeugen nach dem Oberbegiff des Anspruchs 1.

Bei den bekannten Warndreiecken dieser Art haben die Standbeine zum Zwecke ihrer Lagerung abgewinkelte Enden. Nach EP 0 342 449 und nach EP 0 663 322, die den Oberbegriff des Anspruchs 1 zeigt, sind die abgewinkelten Enden in Lagerbohrungen eines aus Kunststoff bestehenden, an einer metallischen Trägerplatte angebrachten Lagerkörpers schwenkbar gelagert. Zur Erreichung eines genügenden Bodenabstands des aufgestellten Warndreicks bilden die Achsen der Lagerbohrungen einen spitzen Winkel miteinander. Der Lagerkörper ist auch im Hinblick auf das Einsetzen der Standbeine in die Lagerbohrungen relativ kompliziert gestaltet und erfordert die Anbringung an der metallischen Trägerplatte.

Nach WO 96/28319 ist das abgewinkelte Ende des Standbeins direkt in der Lagerbohrung einer metallischen Basisplatte von dachförmigem Querschnitt gelagert. Die Lagerung erfordert eine Metallplatte, die aus einem Blechstück besteht. Die Lagerung und Halterung des Standbeins in der Plattenbohrung ist daher nicht sicher. Der Montageaufwand ist erheblich, da zunächst die abgewinkelten Standbeinenden in die Bohrungen der Metallplatte eingesetzt werden müssen und dann die Basisplatte mit den eingesetzten Standbeinen in den Lagerkörper eingesetzt werden muß.

Der Erfindung liegt die Aufgabe zugrunde, ein zusammenlegbares Warndreieck der eingangs genannten Art zu schaffen, bei dem die Standbeinenden zum Zwecke ihrer Lagerung nicht abgewinkelt werden müssen. Ferner soll der Montageaufwand, insbesondere die Anbringung der Standbeine an dem Warndreieck vereinfacht werden. Außerdem soll ein Warndreieck geschaffen werden, dessen aus Kunststoff bestehenden Lagerkörper möglichst einfach ausgebildet sind. Schließlich soll ein Warndreieck geschaffen werden, das ohne metallische Basisplatte auskommen kann. Weitere Vorteile ergeben sich aus der folgenden Beschreibung.

Diese Aufgabe wird bei dem eingangs genannten Warndreieck erfindungsgemäß durch die kennzeichnenden Merkmale des Anspruchs 1 gelöst. Mit dem am Standbeinende ausgebildeten Wulst oder einer Querschnittsvergrößerung ist das Standbein in einer entsprechenden Lageraussparung des Lagerkörpers gelagert, wobei das Bein selbst durch den Führungsspalt nach außen ragt. Die Führung des Standbeins beim Aus- und Einschwenken, insbesondere die beim Ausschwenken erfolgende Neigung des Standbeins zur Horizontalen zwecks Erreichung des erforderlichen Bodenabstands wird ausschließlich durch den Verlauf und die Form des Führungsspalts bestimmt, da die Lagerung selbst anders als bei den genannten bekannten Warndreiecken keine Führungsfunktion hat.

Nach der bevorzugten Ausführungsform des erfindungsgemäßen Warndreiecks ist der Wulst kugelförmig geformt. Dieser kugelförmige Wulst wirkt mit einer Lageraussparung zusammen, die vorzugsweise eine kugelschalenförmige Lagerfläche(n) hat. Dabei kann die Kugel z.B. mit einer Hohlkugelzone als Lagerschale in Eingriff sein, so daß die Lagerung des Standbeins (Kugel/Hohlkugelzone) von seiner Führung (Spalt) funktionell getrennt ist. Durch die Lagerung des Standbeins mittels eines an seinem Ende vorzugsweise kugelförmig ausgebildeten Wulstes entfällt nicht nur die bei der bekannten Standbeinlagerung erforderliche winkelförmige Biegung am Ende des Standbeins, sondern es kann auch die Höhe des Lagerkörpers verringert werden, wodurch das zusammengelegte Warndreieck auf eine geringere Breite kommt. Der Wulst kann ein angeformter Wulst aus dem gleichen Material wie das Standbein sein. Er kann aber auch aus einem anderen Material bestehen und z.B. durch Schrauben oder Kleben an dem Standbeinende befestigt sein. Zweckmäßigerweise ist der Wulst des aus Draht, z.B. Edelstahldraht bestehenden Standbeins durch Anstauchen (Anschlagen) gebildet. Auf diese Weise können unterschiedliche Wulstformen und -größen, insbesondere ein kugelförmiger Wulst am Standbeinende gebildet werden.

Nach der bevorzugten Ausführungsform des Warndreiecks sind die Standbeine geradlinig ausgebildet. Damit entfällt die Biegearbeit an den z.B. aus Stahldraht bestehenden Standbeinen. Insbesondere können die Standbeine aus einem dickeren Stahldraht als bisher gebildet werden und damit einen wesentlichen Teil des für die Standfestigkeit des aufgestellten Warndreiecks erforderlichen Gewichtes liefern.

Bei der bevorzugten Ausführungsform des erfindungsgemäßen Warndreiecks ist der Führungsspalt in der Ausschwenkrichtung des Standbeins wenigstens teilweise abwärts geneigt. Durch die beim Ausschwenken zunehmende Abwärtsneigung des Standbeins erhält das aufgestellte Warndreieck den gewünschten Bodenabstand.

Zweckmäßigerweise hat die Lageraussparung eine Einführungsöffnung, die etwas kleiner als der Wulst am Standbeinende ist. Da der Lagerkörper aus einem Kunststoff mit geringer Elastizität besteht, kann der Wulst durch die Einführungsöffnung in die Aussparung eingedrückt werden. Je nach der Elastizität des Kunststoffmaterials des Lagerkörpers kann die Dimension der Einführungsöffnung 0,2 bis 1,0 mm, z.B. 0,5 mm kleiner als die Dimension des Wulstes sein. Bei einem kugelförmigen Wulst kann dieser beispielsweise einen Durchmesser in dem Bereich von 11 bis 13 mm, beispielsweise von 12 mm haben. Zweckmäßigerweise sind die Einführungsöffnungen an den voneinander abgewandten Seiten der Lagerkörper angeordnet. Das Standbein wird zum Einsetzen in den Lagerkörper mit dem freien Standbeinende zuerst durch die Einführungsöffnung und den Führungsspalt geschoben, und zum Schluß wird der Wulst durch die Einführungsöffnung in die Lageraussparung eingedrückt. Die Einführungsöffnung kann auch auf anderen Seiten des Lagerkörpers, z.B. auf der Oberseite, angeordnet sein. Es ist auch möglich, den Führungsspalt wenigstens an einer Stelle so breit auszubilden, daß der Wulst an dieser Stelle durch den Spalt in die Lageraussparung eingedrückt werden kann.

Bei der bevorzugten Ausführungsform des erfindungsgemäßen Warndreiecks sind die Lagerkörper unmittelbar an der Basisleiste angebracht. Diese Ausführungsform hat keine metallische Basisplatte mehr, wodurch sich eine Verringerung der Montage- und Materialkosten ergibt. Um die durch den Wegfall der metallischen Basisplatte eingetretene Gewichtsverringerung zu kompensieren, sind die Standbeine z.B. aus einem zylindrischen Stahldraht von größerem Durchmesser als bei den Standbeinen der bekannten Warndreiecke. Zweckmäßigerweise liegt der Drahtdurchmesser in dem Bereich von 5 bis 9 mm (gegenüber 4 bis 6 mm bei bekannten Warndreiecken).

Zweckmäßigerweise ist an dem Lagerkörper mittig ein Befestigungssteg angeformt. Über diesen Steg wird der Lagerkörper an der Basisleiste des Warndreiecks befestigt, z.B. durch Kleben, Nieten oder dergl.. Der Befestigungssteg liegt in der Mittelebene des Lagerkörpers, so daß dieser an den beiden Enden der Basisleiste (nach Drehung um 180°) in gleicher Weise angebracht werden kann.

An jedem Lagerkörper, vorzugsweise an seinem Befestigungssteg, kann beidseitig eine Raste zur Festlegung der eingeschwenkten, in dem anderen Lagerkörper gelagerten Standbeine vorgesehen sein. Hierdurch wird vermieden, daß die Standbeine bei zusammengelegtem Warndreieck durch Vibration aneinanderstoßen und Geräusche verursachen.

Zwei Ausführungsformen des erfindungsgemäßen Warndreiecks werden nun an Hand der Zeichnung näher beschrieben. Es zeigen
Figur 1 die Ansicht des aufgerichteten Warndreiecks mit eingeschwenkten Standbeinen;
Figur 2 eine perspektivische Darstellung des am Ende der Basisleiste angebrachten Lagerkörpers mit eingeschwenkten Standbeinen in vergrößertem Maßstab bei einer ersten Ausführungsform des Warndreiecks;
Figur 3 einen Schnitt nach der Linie III-III der Figur 2;
Figur 4 einen Schnitt nach der Linie IV-IV der Figur 2;
Figur 5 einen Schnitt nach der Linie V-V der Figur 1 in vergrößertem Maßstab;
Figur 6 eine Darstellung entsprechend Figur 2 bei einer zweiten Ausführungsform des Warndreiecks;
Figur 7 einen Schnitt nach der Linie VII-VII der Figur 6; und
Figur 8 einen Schnitt nach der Linie VIII-VIII der Figur 6.

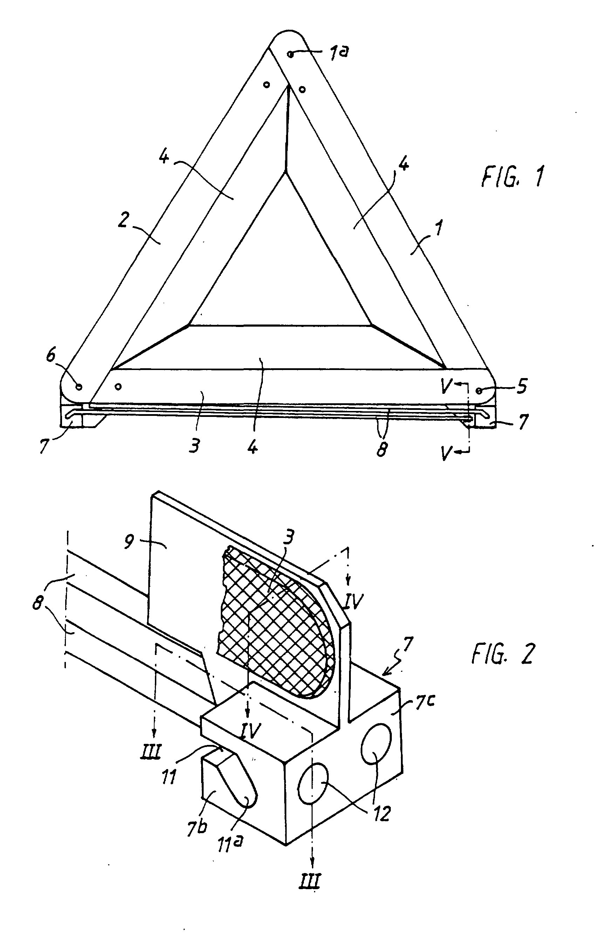

Das in Figur 1 gezeigte Warndreieck hat drei rückstrahlende Kunststoffleisten 1,2,3, von denen die Leiste um das Gelenk 5 und die Leiste 2 um das Gelenk 6 zu der Basisleiste 3 schwenkbar sind. Die den Gelenken 5,6 entgegengesetzten Enden der Leisten 1 und 2 haben einen Druckknopf 1^{a}, so daß die Leisten 1 und 2 in der in Figur 1 gezeigten Lage unter Bildung eines Dreiecks an ihren oberen Enden verbunden werden können. Im Inneren des durch die Leisten 1-3 gebildeten Dreiecks sind trapezförmige Kunststoffzuschnitte 4 mit roter fluoreszierender Oberfläche angebracht. An den beiden Enden der Basisleiste 3 sind rückseitig Lagerkörper 7 z.B. durch Nieten befestigt, in denen die Standbeine 8 gelagert sind und die in den Figuren 2 bis 5 näher erläutert werden.

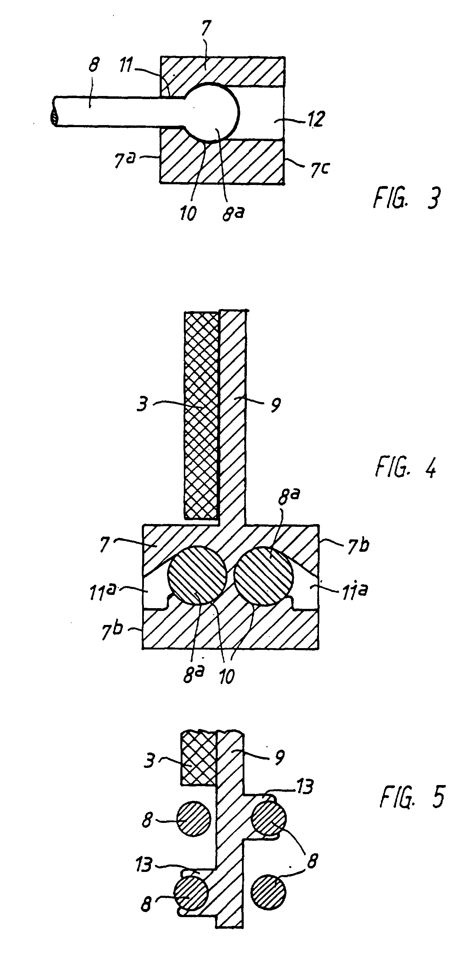

Nach den Figuren 2 bis 4 bestehen die Lagerkörper 7 im wesentlichen aus einem quaderförmigen Block aus einem Kunststoff geringer Elastizität. Oberseitig ist an dem Block ein Befestigungssteg 9 angeformt, mit dem der Lagerkörper 7 an der Rückseite der Basisleiste 3 z.B. durch Kleben oder Nieten befestigt ist. Der Lagerkörper hat zu beiden Seiten des Steges 9 in seinem Inneren je eine Lageraussparung 10, wie aus den Schnittdarstellungen der Figuren 3 und 4 ersichtlich ist. Bei der dargestellten Ausführungsform sind an den Enden der Standbeine 8 kugelförmige Wülste 8^{a} angestaucht. Der kugelförmige Wulst 8^{a} ist in der Lageraussparung 10 gelagert, die im wesentlichen die Form einer Hohlkugelzone hat.

Die Lagerkörper 7 haben auf den einander zugewandten Innenseiten beiderseits ihrer Mittelebene bzw. ihres Befestigungssteges je einen Führungsspalt 11, durch den das mit seinem Wulst 8^{a} in den Lagerkörper 7 eingesetzte Standbein 8 nach außen ragt. Der Führungsspalt verläuft auf den einander zugewandten Seiten 7^{a} des Lagerkörpers 7 horizontal. Der Spalt setzt sich an den beiden Seitenflächen 7^{b} fort, wobei ein Teil 11^{a} des Führungsspalts abwärts geneigt ist, wie aus Figur 2 ersichtlich. Beim Ausschwenken der Standbeine 8 aus der in Figur 2 gezeigten eingeschwenkten Lage bewegen sich die Standbeine infolge der Führung in dem Spalt 11 zunächst in einer horizontalen, d.h. zur Ebene des aufgerichteten Warndreiecks senkrechten Ebene. Beim weiteren Ausschwenken zur Seite in den Teil 11^{a} des Führungsspaltes werden die Standbeine 8 zugleich abwärts geschwenkte, so daß die von den freien Enden der Standbeine bestimmte Bodenebene den gewünschten Abstand von der Unterseite der Lagerkörper 7 erhält.

Bei der dargestellten Ausführungsform des Warndreiecks sind an der Rückseite 7^{c} der Lagerkörper 7 Einführungsöffnungen 12 vorgesehen, durch die das Standbein 8 mit dem Wulst 8^{a} in den Lagerkörper eingeführt und soweit vorgeschoben wird, bis der Kugelwulst 8^{a} in der Lagerausnehmung 10 positioniert ist, wie in den Figuren 3 und 4 dargestellt ist. Aus Figur 3 ist ersichtlich, daß die kreisrunde Einführungsöffnung 12 einen etwas geringeren Durchmesser als der Wulst 8^{a} hat. Die Einführung des Wulstes in die Lageraussparung 10 erfordert daher einen geringen Druck.

Wie in Figur 2 angedeutet ist, ist der Befestigungssteg 9 vor der Vorderseite 7^{a} des Lagerkörpers 7 ein Stück nach unten gezogen. Auf diesem Teil des Steges 9 ist beidseitig eine Rastaufnahme 13 für Standbeine 8 ausgebildet, wie aus Figur 5 ersichtlich ist. An dem Lagerkörper am anderen Ende der Basisleiste 3 sind die Rastaufnahmen 13 entsprechend versetzt angeordnet, so daß dort die anderen beiden Standbeine einrasten können und damit festgelegt werden. Bei der erfindungsgemäßen Standbeinlagerung mittels eines angeformten Wulstes wird nicht nur die Montage vereinfacht. Es kann auch die sonst zur Beschwerung eingesetzte metallische Basisplatte wegfallen, wenn die metallischen Standbeine 8 einen ausreichend großen Querschnitt haben, so daß das zur Standfestigkeit des aufgestellten Warndreiecks erforderliche Gewicht durch sie geliefert wird.

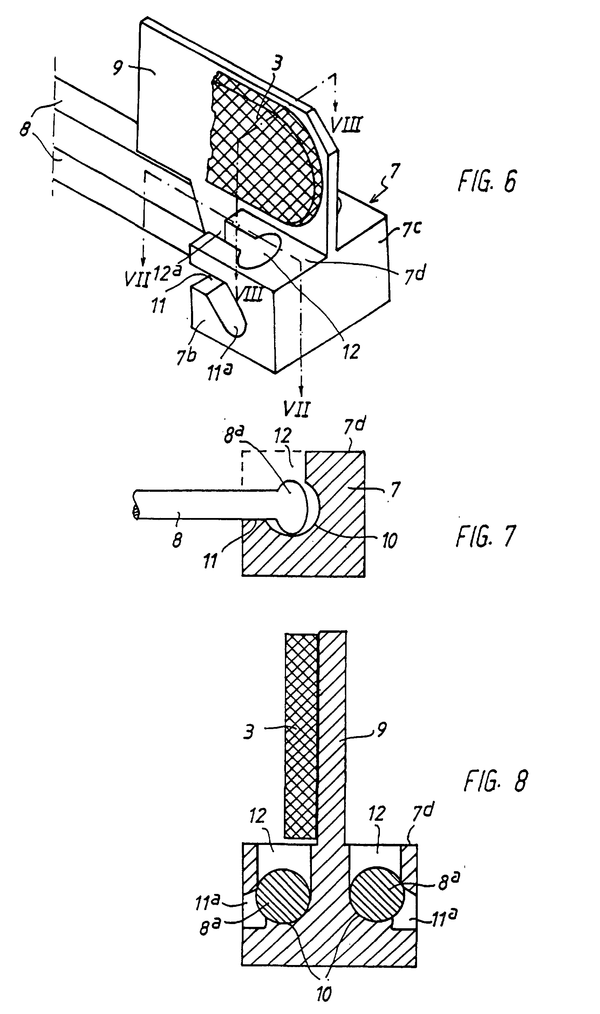

Bei der in den Figuren 6 bis 8 dargestellten Ausführungsform befinden sich die Einführungsöffnungen 12 auf der Oberseite 7^{d} des Lagerkörpers 7 mit einem zur Vorderseite 7^{a} verlaufenden Spalt 12^{a} für die Einführung des Standbeins 8. Der Wulst 8^{a} hat Ellipsoidform, während die Lageraussparungen 10 in dem Lagerkörper 7 im wesentlichen hohlkugelförmig mit den Ausnehmungen 11,11^{a},12,12^{a} ausgebildet sind.

## Patentansprüche

1. Zusammenlegbares Warndreieck zur Mitführung in Kraftfahrzeugen, mit drei rückstrahlenden Leisten, von denen je eine Leiste (1,2) mit den Enden der dritten Basisleiste (3) schwenkbar verbunden ist, einem Lagerkörper (7) an jedem der beiden Enden der Basisleiste (3) und vier Standbeinen (8), die paarweise in den beiden Lagerkörpern (7) schwenkbar gelagert sind, wobei in den Lagerkörpern (7) für jedes Standbein (8) eine Lageraussparung (10) und ein von der Lageraussparung (10) nach außen verlaufender Spalt (11,11^{a}) zur Führung des Standbeins (8) bei seiner Schwenkbewegung ausgebildet sind **dadurch gekennzeichnet, daß** an dem Lagerende jedes Standbeins (8) ein Wulst (8^{a}) ausgebildet ist und die lageraussparung (10) den Wulst (8^{a}) aufnimmt.

2. Warndreieck nach Anspruch 1, **dadurch gekennzeichnet, daß** der Wulst (8^{a}) kugelförmig ausgebildet ist.

3. Warndreieck nach Anspruch 1 oder 2, **dadurch gekennzeichnet, daß** der Wulst (8^{a}) des aus Draht bestehenden Standbeins (8) durch Anstauchen gebildet ist.

4. Warndreieck nach einem der Ansprüche 1 bis 3, **dadurch gekennzeichnet, daß** die Standbeine (8) geradlinig ausgebildet sind.

5. Warndreieck nach einem der Ansprüche 1 bis 4, **dadurch gekennzeichnet, daß** der Führungsspalt (11,11^{a}) in Ausschwenkrichtung des Standbeins (8) wenigstens teilweise abwärts geneigt ist.

6. Warndreieck nach einem der Ansprüche 1 bis 5, **dadurch gekennzeichnet, daß** die Lageraussparung (10) eine Einführungsöffnung (12) hat, die etwas kleiner als der Wulst (8^{a}) am Standbeinende ist.

7. Warndreieck nach Anspruch 6, **dadurch gekennzeichnet, daß** die Einführungsöffnungen (12) an den voneinander abgewandten Seiten (7^{c}) der Lagerkörper (7) angeordnet sind.

8. Warndreieck nach einem der Ansprüche 1 bis 7, **dadurch gekennzeichnet, daß** die Lagerkörper (7) unmittelbar an der Basisleiste (3) angebracht sind.

9. Warndreieck nach einem der Ansprüche 1 bis 8, **dadurch gekennzeichnet, daß** an dem Lagerkörper (7) mittig ein Befestigungssteg (9) angeformt ist.

10. Warndreieck nach einem der Ansprüche 1 bis 9, **dadurch gekennzeichnet, daß** an jedem Lagerkörper (7) beidseitig eine Raste (13) zur Festlegung der eingeschwenkten, in dem anderen Lagerkörper (7) gelagerten Standbeine (8) vorgesehen ist.

## Claims

1. A collapsible emergency reflective triangle to be carried along in motor vehicles, with three reflective rails, of which one respective rail (1, 2) is connected in a pivoted fashion to the ends of the third base rail (3), with a bearing member (7) on each of the two ends of the base rail (3), and with four support legs (8) that are arranged in pairs in the two bearing members (7) in a pivoted fashion, wherein a bearing recess (10) for each support leg (8) and a gap (11, 11a) that extends outward from the bearing recess (10) and serves for guiding the support leg (8) during its pivoting movement are arranged in the bearing members (7), **characterized by** the fact that a bead (8a) is arranged on the bearing end of each support leg (8), and by the fact that the bearing recess (10) accommodates the bead (8a).

2. A emergency reflective triangle according to claim 1, **characterized by** the fact that the bead (8a) is realized spherically.

3. A emergency reflective triangle according to claim 1 or 2, **characterized by** the fact that the bead (8a) of the support leg (8) that consists of a wire is formed by means of upsetting.

4. A emergency reflective triangle according to one of claims 1-3, **characterized by** the fact that the support legs (8) are realized linearly.

5. A emergency reflective triangle according to one of claims 1-4, **characterized by** the fact that at least part of the guide gap (11, 11a) is downwardly inclined in the outward pivoting direction of the support leg (8).

6. A emergency reflective triangle according to one of claims 1-5, **characterized by** the fact that the bearing recess (10) has an insertion opening (12) that is slightly smaller than the bead (8a) on the end of the support leg.

7. A emergency reflective triangle according to claim 6, **characterized by** the fact that the insertion openings (12) are arranged on the sides (7c) of the bearing members (7) which face away from one another.

8. A emergency reflective triangle according to one of claims 1-7, **characterized by** the fact that the bearing members (7) are directly arranged on the base rail (3).

9. A emergency reflective triangle according to one of claims 1-8, **characterized by** the fact that a fixing web (9) is integrally formed onto the center of the bearing member (7).

10. A emergency reflective triangle according to one of claims 1-9, **characterized by** the fact that a catch (13) for fixing the inwardly pivoted support legs (8) arranged in the other bearing member (7) is provided to both sides of each bearing member (7).

## Revendications

1. Triangle de signalisation assemblable à emporter dans des véhicules, avec deux bandeaux réfléchissantes dont un des bandeaux (1, 2) est relié en pouvant pivoter aux extrémités du troisième bandeau de base (3), un corps d'appui (7) à chacune des deux extrémités du bandeau de base (3) et quatre pieds (8), qui sont installés par paires en pouvant pivoter dans les deux corps de base (7), un évidement de l'appui (10) et une fente (11, 11a) orientée de l'évidement de l'appui (10) vers l'extérieur étant prévus dans les corps d'appui (7) pour chaque pied (8), **caractérisé en ce que**, à l'extrémité d'appui de chaque pied (8), un renflement (8a) est formé et que l'évidement de l'appui (10) s'encastre dans le renflement (8a).

2. Triangle de signalisation selon la revendication 1, **caractérisé en ce que** le renflement (8a) est en forme de boule.

3. Triangle de signalisation selon la revendication 1 ou 2, **caractérisé en ce que** le renflement (8a) du pied (8) fabriqué en fil de fer est formé par refoulement.

4. Triangle de signalisation selon une des revendications 1 à 3, **caractérisé en ce que** les pieds (8) sont de forme rectiligne.

5. Triangle de signalisation selon une des revendications 1 à 4, **caractérisé en ce que** la fente de guidage (11, 11a) est inclinée au moins partiellement vers le bas dans le sens de pivotement du pied (8).

6. Triangle de signalisation selon une des revendications 1 à 5, **caractérisé en ce que** l'évidement de l'appui (10) a une ouverture d'introduction (12) qui est légèrement plus petite que le renflement (8a) de l'extrémité du pied.

7. Triangle de signalisation selon la revendication 6, **caractérisé en ce que** les ouvertures d'introduction (12) sont disposées sur les faces opposées l'une à l'autre (7c) des corps d'appui (7).

8. Triangle de signalisation selon une des revendications 1 à 7, **caractérisé en ce que** les corps d'appui (7) sont placés directement sur le bandeau de base (3).

9. Triangle de signalisation selon une des revendications 1 à 8, **caractérisé en ce qu'**une traverse de fixation (9) est formée au milieu du corps de base (7).

10. Triangle de signalisation selon une des revendications 1 à 9, **caractérisé en ce que**, sur chaque corps de base (7), des deux côtés, un cran (13) pour la fixation des pieds (8) tournés vers l'intérieur placés dans l'autre corps de base (7) est prévu.
